# EUROPÄISCHE PATENTSCHRIFT

(11) **EP 4 649 330 B1**
(45) Veröffentlichungstag und Bekanntmachung des Hinweises auf die Patenterteilung: **25.11.2026**
(21) Anmeldenummer: 24700015.1
(22) Anmeldetag: 03.01.2024
(51) Int. Cl.: G01S 7/52, G01S 15/931

(54) **VERFAHREN ZUM BETREIBEN EINER ELEKTROAKUSTISCHEN WANDLERVORRICHTUNG UND SYSTEM ZUM DURCHFÜHREN DES VERFAHRENS**
METHOD FOR OPERATING AN ELECTROACOUSTIC CONVERTER DEVICE, AND SYSTEM FOR CARRYING OUT THE METHOD
PROCÉDÉ DE FONCTIONNEMENT DE CONVERTISSEUR ÉLECTROACOUSTIQUE ET SYSTÈME POUR LA MISE EN OEUVRE DE CE PROCÉDÉ

(30) Priorität: 11.01.2023 DE 102023200158
(43) Veröffentlichungstag der Anmeldung: 19.11.2025
(73) Patentinhaber: Robert Bosch GmbH, 70442 Stuttgart (DE)
(72) Erfinder: BOECKER, Matthias, 66113 Saarbrücken (DE)
(86) Internationale Anmeldenummer: PCT/EP2024/050058
(87) Internationale Veröffentlichungsnummer: WO 2024/149643

(56) Entgegenhaltungen:
- WO-A1-2022/101150
- DE-A1- 19 924 755
- US-B1- 10 871 555

## Beschreibung

Die vorliegende Erfindung betrifft ein Verfahren zum Betreiben einer elektroakustischen Wandlervorrichtung und ein System zum Durchführen des Verfahrens.

Sensorbasierte Systeme, welche aus sogenannten Phased-Arrays aufgebaut sind, sind aus verschiedenen Anwendungsgebieten bekannt. So weisen beispielsweise Radarsysteme und Ultraschallsysteme in der medizinischen Diagnostik oder bei der Materialprüfung in vielen Fällen solche Arrays auf. Allen Phased-Array Sensor-Systemen ist gemeinsam, dass ein auf Wellenbasis bestehendes Erregersignal von einer Mehrzahl von Elementen ausgesendet wird und die an Objekten rückgestreuten Wellen wieder vom Sensor-System detektiert werden. In den meisten Fällen werden die Elemente sowohl zum Erregen als auch zum Detektieren verwendet. Aufgrund der Laufzeitunterschiede (ToF: Time of Flight) der rückgestreuten Wellen können Rückschlüsse auf die Entfernung der Objekte, an welchen die Wellen reflektiert wurden, gewonnen werden. Ein Vorteil von Array basierten Sensor-Systemen ist, dass die einzelnen Detektionselemente nicht gleichzeitig von den rückgestreuten Wellen getroffen werden, wie dies bei Einzelsensoren der Fall ist. Aus diesen Zeitunterschieden lassen sich weitere Informationen bezüglich der genauen Objektposition und Größe treffen (z.B. Objektklassifizierung).

Neben den Vorteilen von ToF-Messungen haben Array Systeme noch einen weiteren Vorteil einer veränderbaren Richtcharakteristik eines emittierten Strahls (beam steering), der sich durch Interferenz der jeweils von den Einzelelementen des Arrays emittierten Wellen ergibt. Die einzelnen Elemente des Arrays können phasenversetzt angesteuert werden, wodurch die Schallkeule in verschiedene Richtungen gelenkt bzw. geneigt werden kann. Bei auf Schall basierenden Systemen hängt die Form der entstehenden Schallkeule stark von der Größe der Elemente ab, an welchen der Schall erzeugt wird. Bei Einzelsensoren sind die Wirkzusammenhänge so, dass mit kleiner werdender Emissionsfläche die Schallkeule immer größer wird, jedoch die Schallamplitude immer weiter abnimmt. Typische Abmessungen eines auf Schall, bzw. auf Ultraschall basierenden Schallwandlers liegen im Bereich von einigen mm bis cm, was der Größenordnung der verwendeten Wellenlänge entspricht.

Bei einem elektroakustischen Wandlerelement, beispielsweise einem Ultraschallsensor, wird typischerweise ein Piezomaterial verwendet, um eine Membran zu Schwingungen anzuregen. Ein an eine piezoelektrische Kapazität des Wandlerelements angelegtes elektrisches Spannungsfeld muss sich innerhalb der piezoelektrischen Kapazität zunächst aufbauen. Dies kann bewirken, dass aufgrund von bauartbedingten Unterschieden die Ansteuerung der Elemente, welche die Bewegung der schallemittierenden Elemente ermöglich, nicht in Phase erfolgen. Bei einem einzelnen Wandlerelement sind solche Verschiebungen der Phase nicht von besonderer Relevanz. In einem Ultraschall Array und insbesondere beim beam steering ist es jedoch zwingend erforderlich, dass die einzelnen Elemente phasengleich oder mit einem definiertem Phasenunterschied zueinander schwingen. US10871555B1 offenbart ein Verfahren zum Betreiben eines Arrays zweier elektroakustischer Wandlerelemente wobei das erste Wandlerelement mittels eines ersten Steuersignals und das zweite Wandlerelements mittels eines zweiten Steuersignals angesteuert wird,wobei das erste Steuersignal und das zweite Steuersignal einen einer erwünschten Phasenverschiebung entsprechenden Phasenversatz aufweisen.

Ein Problem besteht darin, dass bauartbedingte Phasenunterschiede und ihre Ursachen bekannte sein müssen, um sie kompensieren zu können. Diese sind ggf. bei der Herstellung der einzelnen Arrays zu erfassen und zu berücksichtigen, hat aber die Nachteile, dass ggf. Alterungseffekte, welche einen Einfluss auf die Phasenlagestabilität haben, nicht ausreichend gut vorhergesagt werden können, oder, dass über den kompletten thermischen Arbeitsbereich entsprechende Aussagen anhand einer Werkskalibrierung nur unzureichend sind, oder auch, dass der Kalibrieraufwand sehr hoch wird, wenn z.B. bei der Kalibrierung auch Temperaturkurven angesteuert werden müssen.

Eine Aufgabe der vorliegenden Erfindung besteht darin, ein verbessertes Verfahren zum Betreiben einer elektroakustischen Wandlervorrichtung anzugeben und ein System zum Durchführen des Verfahrens bereitzustellen. Diese Aufgabe wird durch ein Verfahren zum Betreiben einer elektroakustischen Wandlervorrichtung und ein System zum Durchführen des Verfahrens mit den Merkmalen der jeweils unabhängigen Ansprüche gelöst. Vorteilhafte Weiterbildungen sind in abhängigen Ansprüchen angegeben.

Bei einem Verfahren zum Betreiben einer elektroakustischen Wandlervorrichtung weist diese zumindest ein erstes Wandlerelement und ein zweites Wandlerelement auf. Die Wandlerelemente sind jeweils dazu ausgebildet, akustische Signale durch elektrische Anregung zu generieren und/oder durch akustische Anregung zu detektieren. Das Verfahren umfasst folgende Verfahrensschritte. Das erste Wandlerelement wird mittels eines elektrischen Erregersignals angeregt. Ein infolge einer elektrischen und/oder mechanischen Kopplung des ersten und des zweiten Wandlerelements auftretendes erstes Übersprechsignal wird am zweiten Wandlerelement detektiert, während das erste Wandlerelement angeregt wird. Das zweite Wandlerelement wird mittels des elektrischen Erregersignals angeregt. Ein infolge der elektrischen und/oder mechanischen Kopplung des ersten und des zweiten Wandlerelements auftretendes zweites Übersprechsignal wird am ersten Wandlerelement detektiert, während das zweite Wandlerelement angeregt wird. Es wird eine Phasenverschiebung zwischen dem ersten Übersprechsignal und dem zweiten Übersprechsignal ermittelt. Das erste Wandlerelement wird mittels eines ersten Steuersignals und das zweite Wandlerelement wird mittels eines zweiten Steuersignals angesteuert. Das erste Steuersignal und das zweite Steuersignal weisen einen der ermittelten Phasenverschiebung entsprechenden Phasenversatz auf.

Die elektroakustische Wandlervorrichtung kann auch als eine elektroakustische Sensoranordnung bzw. als ein Sensor-Array bezeichnet werden, das durch die zumindest zwei Wandlerelemente gebildet wird. In einer Ausführungsform sind die Wandlerelemente der elektroakustischen Wandlervorrichtung baugleich ausgebildet. Obwohl die Wandlerelemente baugleich ausgebildet sind, können sie eine bauartbedingte Phasenverschiebung aufweisen, da beim Herstellen der elektroakustischen Wandlervorrichtung Fertigungstoleranzen zu Abweichungen und Variationen im Aufbau führen können.

Vorteilhafterweise ermöglicht es das Verfahren, die eigentlich unerwünschten Übersprechsignale gezielt dazu zu verwenden, eine bauartbedingte und unerwünschte Phasenverschiebung bei der elektrischen Anregung der Wandlerelemente zu berücksichtigen und zu kompensieren, d.h. die einzelnen Wandlerelemente derart aufeinander abzustimmen, dass diese im Normalbetrieb mit einem definierten Phasenunterschied zueinander schwingen können. Durch die Abstimmung der Wandlerelemente aufeinander kann vorteilhafterweise eine gezielte Strahlablenkung (beem steering) ermöglicht werden. Vorteilhafterweise kann die Phasenverschiebung kompensiert werden, ohne eine genaue Kenntnis darüber zu haben, worin genau die bauartbedingten Unterschiede der Wandlerelemente bestehen.

Beim Verfahren wird das zweite Wandlerelement zeitlich versetzt zum ersten Wandlerelement elektrisch angeregt. Das zweite Wandlerelement kann angeregt werden, wenn eine Schwingung des ersten Wandlerelements vollständig oder zumindest teilweise abgeklungen ist, etwa, wenn am zweiten Wandlerelement kein erstes Übersprechsignal durch die Anregung des ersten Wandlerelements mehr detektiert werden kann.

In einer Ausführungsform umfasst das Verfahren die folgenden zusätzlichen Verfahrensschritte. Es wird ein Amplitudenverhältnis zwischen dem ersten Übersprechsignal und dem zweiten Übersprechsignal ermittelt. Die Steuersignale werden auf Basis des ermittelten Amplitudenverhältnisses angepasst. Die Wandlerelemente werden mittels der angepassten Steuersignale angesteuert.

Vorteilhafterweise ermöglicht dies eine bauartbedingt Amplitudendifferenz bei der elektrischen Anregung der Wandlerelemente zu berücksichtigen und zu kompensieren, d.h. die einzelnen Wandlerelemente derart aufeinander abzustimmen, dass diese im Normalbetrieb beispielsweise mit gleicher Amplitude schwingen können. Auch dadurch wird eine gezielte Strahlablenkung ermöglicht. Alternativ kann anstatt des Amplitudenverhältnisses auch die Amplitudendifferenz zwischen den Übersprechsignalen ermittelt werden, um die Steuersignale auf Basis der Amplitudendifferenz anzupassen.

In einer Ausführungsform umfasst das Verfahren die folgenden zusätzlichen Verfahrensschritte. Die ermittelte Phasenverschiebung und/oder das ermittelte Amplitudenverhältnis wird mit einer Datenhistorie aufweisend Informationen über zuvor ermittelte Phasenverschiebungen und/oder Amplitudenverhältnisse verglichen. Es wird geprüft, ob die ermittelte Phasenverschiebung und/oder das ermittelte Amplitudenverhältnis Veränderungen unterworfen ist. Die Veränderungen werden beim Ansteuern der Wandlerelemente berücksichtigt, d.h., dass die Steuersignale auf Basis der Veränderungen angepasst werden und die Wandlerelemente auf Basis der angepassten Steuersignale angesteuert werden, um sicherzustellen, dass das erste Steuersignal und das zweite Steuersignal einen der ermittelten Phasenverschiebung entsprechenden Phasenversatz aufweisen.

Die ermittelte Phasenverschiebung und/oder das ermittelte Amplitudenverhältnis der Übersprechsignale können jeweils aufgrund von Temperaturschwankungen und/oder Alterungseffekten selbst Schwankungen unterliegen, was einen merklichen Einfluss auf die Wandlerelemente und das Generieren und/oder Detektieren von akustischen Signalen haben kann. In dieser Ausführungsform wird die Datenhistorie herangezogen, um zu evaluieren, ob die Wandlerelemente sich in einen einwandfreien Zustand befinden, oder ob sie Veränderungen unterworfen sind. So kann es zum Beispiel sein, dass durch teilweise oder ganzflächige Benetzung der Wandlerelemente mit beispielsweise Flüssigkeiten und/oder Eis und/oder Verunreinigungen, oder auch durch eine Beschädigung eine deutliche Variation der Phasenverschiebung und/oder des Amplitudenverhältnisses der Übersprechsignale bewirkt wird.

In diesem Fall kann beispielsweise ein Warnhinweis ausgegeben werden. Dies ist beispielsweise dann zweckmäßig, wenn die elektroakustische Wandlervorrichtung in einer Ausführungsform Bestandteil eines Kraftfahrzeugs ist. In diesem Fall kann die elektroakustische Wandlervorrichtung beispielsweise als ein Einparksensor des Kraftfahrzeugs ausgebildet sein und zur Assistenz beim Einparken des Kraftfahrzeugs dienen. Das Kraftfahrzeug kann dabei insbesondere als ein zumindest teilweise automatisiertes Kraftfahrzeug ausgebildet sein. Typischerweise kann die elektroakustische Wandlervorrichtung dabei in einer Ausführungsform als eine Ultraschallsensor-Anordnung ausgebildet sein, wobei die Wandlerelemente jeweils dazu ausgebildet sind, Ultraschall durch elektrische Anregung zu generieren und/oder durch akustische Anregung zu detektieren. Die elektroakustische Wandlervorrichtung kann jedoch auch unabhängig davon, ob sie Bestandteil des Kraftfahrzeugs ist oder nicht, als eine Ultraschall-Sensoranordnung ausgebildet sein.

Ein weiterer Vorteil des Verfahrens besteht darin, dass es sehr schnell durchgeführt werden kann, beispielsweise innerhalb nur weniger Millisekunden, beispielsweise innerhalb 1 ms, was einer Schallwegstrecke von ca. 30 cm in Luft entspricht. Im Wesentlich ist eine zum Durchführen des Verfahrens erforderliche Zeitdauer lediglich von einer Zeitspanne eines Abklingens der zu Schwingungen angeregten Wandlerelemente abhängig und begrenzt. Insgesamt ist die Zeitdauer, innerhalb derer das Verfahren erfolgt, weitestgehend zu vernachlässigen. Aufgrund des geringen zeitlichen Aufwandes ist es aber anzuraten in einer Ausführungsform das Verfahren bei jeder Verwendung der elektroakustischen Wandlervorrichtung oder nach jedem Start des Kraftfahrzeugs durchzuführen.

In einer Ausführungsform weist die mikroelektroakustische Wandlervorrichtung eine Mehrzahl von elektrisch und/oder mechanisch gekoppelten Wandlerelementen, d.h. insbesondere mehr als zwei Wandlerelemente auf. Die Wandlerelemente werden sukzessive mittels des Erregersignals angeregt und es werden jeweils Übersprechsignale an den Wandlerelementen detektiert, um für alle Wandlerelemente eine Phasenverschiebung zwischen ihren Übersprechsignalen zu ermitteln. Die Wandlerelemente werden jeweils mittels eines separaten Steuersignals angesteuert. Die Steuersignale weisen jeweils einen der ermittelten Phasenverschiebungen entsprechenden Phasenversatz auf.

Vorteilhafterweise kann für jedes Wandlerelement eine bauartbedingte Phasenverschiebung ermittelt und beim Ansteuern der Wandlerelemente kompensiert werden. Es kann beispielsweise für alle Wandlerelemente eine Phasenverschiebung in Bezug auf ein ausgewähltes Wandlerelement, das als Masterelement bezeichnet werden kann, ermittelt werden, wodurch ein phasengleiches Emittieren von Schall und eine Strahlablenkung ermöglicht wird. Die Phasenverschiebungen können beispielsweise auch für alle Wandlerelemente paarweise ermittelt und beim Ansteuern derart berücksichtigt werden, dass paarweise Phasenversätze minimiert sind.

In einer anderen Ausführungsform kann zusätzlich auch das Amplitudenverhältnis bzw. die Amplitudendifferenz für jedes Paar von Wandlerelementen ermittelt werden, um die jeweiligen Steuersignale auf Basis der Amplitudenverhältnisse anzupassen.

Zudem ist es im Gegensatz zu anderen Messmethoden, bei welchen die Sensoren seriell und nicht parallel betrieben werden, möglich, einen Abgleich einer Mehrzahl von elektroakustischen Wandlervorrichtungen zeitgleich durchzuführen. Hierbei ist es von Vorteil, wenn alle Wandlervorrichtungen möglichst nah aneinander angeordnet sind, beispielsweise dadurch, dass alle Wandlervorrichtungen in einer Stoßstange integriert sind. Ein maximaler Abstand zwischen zwei Nachbarsensoren bzw. Wandlervorrichtungen kann beispielsweise, jedoch nicht hierauf beschränkt, 50 cm betragen. Es kann beispielsweise vorgesehen sein, dass eine Wandlervorrichtung als eine emittierende Wandlervorrichtung verwendet und betrieben wird, während alle übrigen Wandlervorrichtungen als detektierende Wandlervorrichtungen verwendet und betrieben werden. Dadurch kann eine horizontale Zuordnung im Rahmen einer Objekterkennung erfolgen.

Ein System zum Durchführen eines Verfahrens gemäß einer der Ausführungsformen weist einen Frequenzgenerator, eine Auswerteeinrichtung und zwei Schaltern auf. Der Frequenzgenerator ist dazu ausgebildet, das elektrische Erregersignal zu generieren. Die Auswerteeinrichtung ist dazu ausgebildet, die infolge der elektrischen und/oder mechanischen Kopplung der Wandlerelemente auftretenden Übersprechsignale an den Wandlerelemente zu detektieren und die Phasenverschiebung zwischen den Übersprechsignalen zu ermitteln. Die Schalter sind jeweils mit dem Frequenzgenerator und der Auswerteeinrichtung verbindbar ausgebildet. Ein erster Schalter ist mit dem ersten Wandlerelement und ein zweiter Schalter mit dem zweiten Wandlerelement verbindbar. Der Frequenzgenerator ist dazu ausgebildet, die Steuersignale auf Grundlage der ermittelten Phasenverschiebung zu generieren. Die Schalter sind dazu vorgesehen, das Erregersignal und die Steuersignale des Frequenzgenerators auf die Wandlerelemente und die Übersprechsignale auf die Auswerteeinrichtung zu schalten.

In einer Ausführungsform ist die Auswerteeinrichtung dazu ausgebildet, ein Amplitudenverhältnis der Übersprechsignale zu ermitteln. Der Frequenzgenerator ist dazu ausgebildet, die Steuersignale auf Basis des Amplitudenverhältnisses anzupassen.

Das Verfahren zum Betreiben einer elektroakustischen Wandlervorrichtung und das System zum Durchführen des Verfahrens werden im Folgenden im Zusammenhang mit schematischen Zeichnungen im Detail beschrieben. Es zeigen:
Fig. 1: eine elektroakustische Wandlervorrichtung mit zwei Wandlerelementen in einer Draufsicht;
Fig. 2: ein elektromechanisches Ersatzschaltbild eines Wandlerelements der elektroakustischen Wandlervorrichtung der Fig. 1;
Fig. 3: ein Kraftfahrzeug mit einer elektroakustischen Wandlervorrichtung gemäß Fig. 1 in einer Seitenansicht und das Prinzip der Strahlablenkung beim beam steering;
Fig.4: ein elektromechanisches Ersatzschaltbild der elektroakustischen Wandlervorrichtung der Fig. 1;
Fig. 5: ein erstes Amplitudensignal eines angeregten ersten Wandlerelements und ein zweites Amplitudensignal eines mit dem ersten Wandlerelement elektrisch und/oder mechanisch gekoppelten zweiten Wandlerelements;
Fig. 6: ein im Rahmen des Verfahrens an das erste und zweite Wandlerelement angelegtes Erregersignal, ein erstes Übersprechsignal am zweiten Wandlerelement und ein zweites Übersprechsignal am ersten Wandlerelement; und
Fig. 7: das System zum Durchführen des Verfahrens zum Betreiben der elektroakustischen Wandlervorrichtung der Fig. 1.

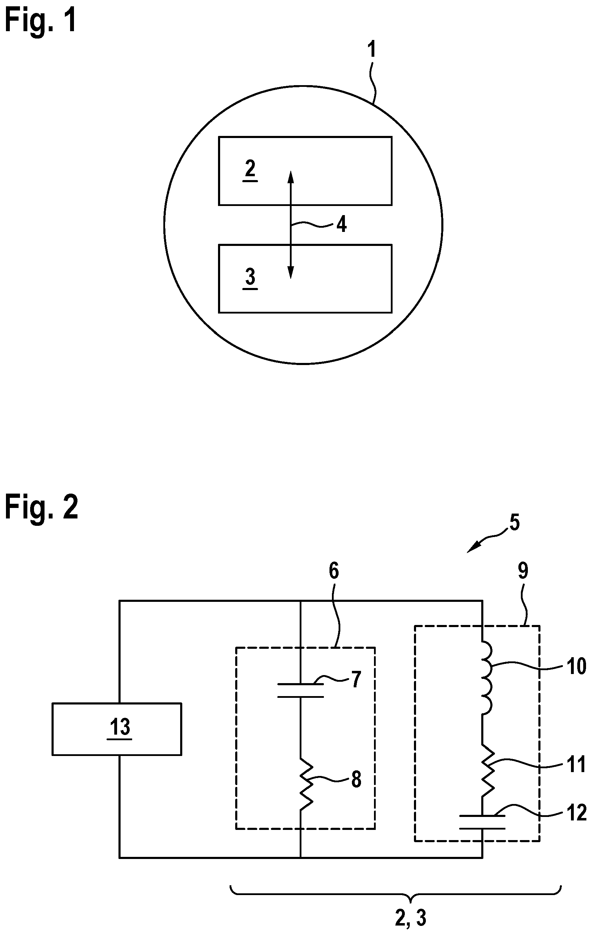

Fig. 1 zeigt schematisch eine elektroakustische Wandlervorrichtung 1 in einer Draufsicht. Die elektroakustische Wandlervorrichtung 1 kann beispielsweise Bestandteil eines Kraftfahrzeugs, insbesondere eines zumindest teilweise automatisierten Kraftfahrzeugs sein. Die elektroakustische Wandlervorrichtung 1 muss jedoch nicht notwendigerweise Bestandteil eines Kraftfahrzeugs sein.

Die elektroakustische Wandlervorrichtung 1 weist zumindest ein erstes Wandlerelement 2 und ein zweites Wandlerelemente 3 auf. Die elektroakustische Wandlervorrichtung 1 kann jedoch eine beliebige Anzahl von Wandlerelementen 2, 3 aufweisen. Beispielsweise kann die elektroakustische Wandlervorrichtung 1 insgesamt vier Wandlerelemente 2, 3 aufweisen. Die elektroakustische Wandlervorrichtung 1 kann auch als eine Anordnung von Wandlerelementen 2, 3 bzw. als ein Array von Wandlerelementen 2, 3 bezeichnet werden. Die Wandlerelemente 2, 3 können dabei beispielsweise in einem quadratischen Gitter angeordnet sein, wobei jedoch auch andere zweckmäßige Anordnungen der Wandlerelemente 2, 3 möglich sind.

Fig. 1 zeigt einen einfachen Aufbau, bei dem die Wandlerelemente 2, 3 der elektroakustischen Wandlervorrichtung 1 baugleich ausgebildet sind. Die Wandlerelemente 2, 3 weisen also insbesondere dieselbe Form und dieselbe Größe auf. Die Wandlerelemente 2, 3 müssen jedoch nicht zwingenderweise baugleich ausgebildet sein und können auch verschiedene Formen und Größen aufweisen.

Die Wandlerelemente 2, 3 sind jeweils dazu ausgebildet, akustische Signale durch elektrische Anregung zu generieren und/oder durch akustische Anregung zu detektieren. Ein Abstand 4 zwischen den Wandlerelementen 2, 3 kann derart gewählt sein, dass eine bestmögliche Strahlablenkung gewährleistet werden kann. Hierzu sollte der Abstand 4 etwa im Bereich einer halben Wellenlänge des zu erzeugenden bzw. zu detektierenden Schalls gewählt werden.

Die Wandlerelemente 2, 3 können jeweils beispielsweise dazu ausgebildet sein, Ultraschall durch elektrische Anregung zu generieren und/oder durch akustische Anregung zu detektieren. Hierzu weist jedes Wandlerelement 2, 3 eine Membran auf, die elektrisch zu Schwingungen anregbar sind. Werden die Membranen akustisch angeregt, kann ein elektrisches Signal ausgelesen werden, wodurch eine auf die Membranen auftreffende Schallwelle detektiert werden kann.

Bei der Erzeugung von Ultraschallquellen werden in der Regel piezoelektrische Materialien (im Folgenden auch kurz als "Piezo-Material" bezeichnet), wie zum Beispiel PZT (Blei-Zirkonat-Titanat), oder im Bereich der Dünnschichttechnologien neben PZT auch AIN (Aluminiumnitrid) oder andere Piezo-Materialien verwendet. Diese Piezo-Materialien werden mit einen Spannungssignal angesteuert. Durch den (inversen) piezoelektrischen Effekt verformt sich das Piezo-Material. Die Piezo-Materialien sind dabei an andere Materialien angebracht, z.B. geklebt, oder auch direkt durch verschiedene Verfahren aufgebracht, sodass sich durch die Bewegung des Piezo-Materials auch dieses Material verformt. Im Bereich der Ultraschallgenerierung werden die Dimensionen der einzelnen Komponenten so ausgelegt, dass bei Ansteuerung im gewollten Frequenzbereich, der beispielsweise, jedoch nicht hierauf beschränkt, etwa im Bereich von 48kHz für eine Einparkunterstützung des Kraftfahrzeugs liegt, eine Resonanz aus elektronischer und/oder mechanischer Kopplung erfolgt. Entsprechende Kopplungen können durch einen elektrisches Ersatzmodel eines Wandlerelements 2, 3 beschrieben werden.

Die Wandlerelemente 2, 3 können dazu ausgebildet sein, eine Membranschwingung und/oder eine kolbenförmige Bewegung (englisch piston) zu vollführen, wobei das elektroakustische Wandlervorrichtung 1über ihre gesamte Fläche als gleichmäßige Schallquellen ausgebildet ist, wenn lediglich Membranschwingungen oder lediglich kolbenförmige Schwingungen zugelassen werden.

Fig. 2 zeigt schematisch ein elektromechanisches Ersatzschaltbild 5 eines Wandlerelements 2, 3 der elektroakustischen Wandlervorrichtung 1 der Fig. 1.

Im elektromechanischen Ersatzschaltbild 5 weisen die Wandlerelemente 2, 3 der elektroakustischen Wandlervorrichtung 1 jeweils einen elektrischen Bereich 6, der die elektrischen Eigenschaften der Wandlerelemente 2, 3 repräsentiert, mit einem kapazitiven Anteil 7 und einen ohmschen Anteil 8 auf, wobei der kapazitive Anteil 7 und der ohmsche Anteil 8 in Reihe geschaltet sind und der elektrische Bereich 6 maßgeblich durch den kapazitiven Anteil 7 des Piezo-Materials dominiert ist. Außerdem weisen die Wandlerelemente 2, 3 im Ersatzschaltbild 5 einen mechanischen Bereich 9 auf, der die Schwingungseigenschaften repräsentiert. Der mechanische Bereich 9 umfasst einen induktiven Anteil 10, der einen Massenteil repräsentiert, einen ohmschen Anteil 11, de eine Dämpfung repräsentiert, und einen kapazitiven Anteil 12, der eine Steifigkeit repräsentiert, auf. Der induktive Anteil 10, der ohmsche Anteil 11 und der kapazitive Anteil 12 des mechanischen Bereichs 9 sind in Reihe geschaltet. Der elektrische Bereich 6 und der mechanische Bereich 9 sind parallel zueinander geschaltet. Die im Ersatzschaltbild 5 dargestellten Elemente repräsentieren also Größen, die das Gesamtsystem eines Wandlerelements 2, 3 und seine Gesamtperformance beschreiben. So haben alle Bauteiltoleranzen einen direkten Einfluss auf die Funktionalität eines Wandlerelements 2, 3.

Typischer Weise wird ein entsprechendes Ultraschallsignal mithilfe einer Signalquelle 13 erstellt, die mit dem elektrischen Bereich 6 und dem mechanischen Bereich 9 verbunden ist. Die Form dieses Signals kann z.B. sinusförmig sein, jedoch sind auch andere Signalformen denkbar, welche in der Regel aber durch den Gesamtaufbau derart verändert werden kann, dass letztendlich wieder eine sinusförmige Schwingung der Membranen der Wandlerelemente 2, 3 erfolgt. Aus diesem Grund kann angenommen werden, dass die Wandlerelemente 2, 3 mit Wechselspannung betrieben werden.

In einer typischen Anordnung eines Ultraschallsystems ist der kapazitive Anteil 7 des Piezo-Materials sehr hoch, sodass in einem Wechselstrom-Zeigerdiagramm eine starke Verschiebung hin zu negativen Phasen erfolgt, da sich ein Spannungsfeld innerhalb der piezoelektrischen Kapazität, also in diesem Fall des Piezo-Materials, beim Anlegen der Wechselspannung aufbauen muss. Durch bauartbedingte Unterschiede kann dieses nun aber dazu führen, dass diese Phase nicht für alle Wandlerelemente 2, 3 genau gleich ist, sondern von Wandlerelement 2, 3 zu Wandlerelement 2, 3 leicht schwanken kann.

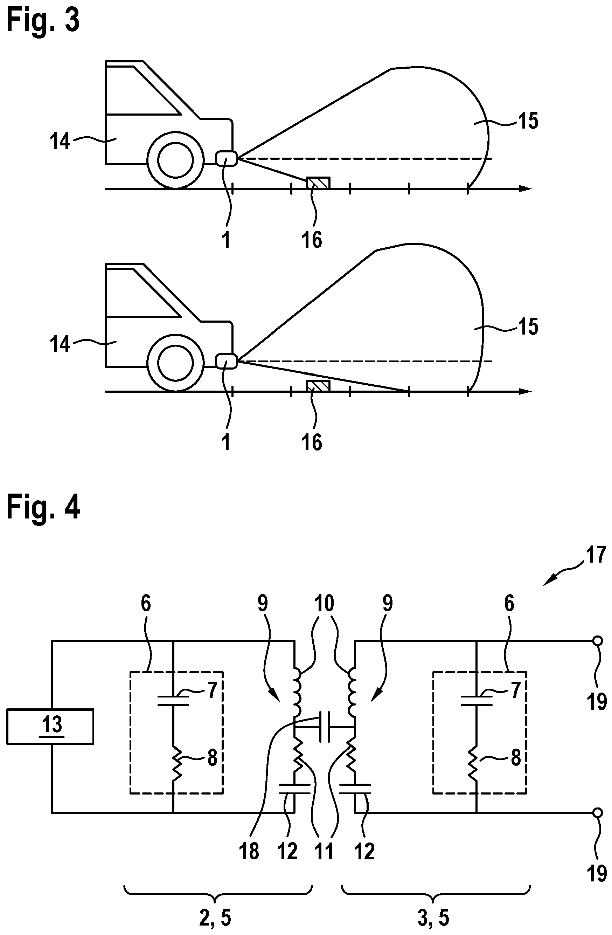

Fig. 3 zeigt schematisch ein Kraftfahrzeug 14 mit einer elektroakustischen Wandlervorrichtung 1 gemäß Fig. 1 in einer Seitenansicht und veranschaulicht das Prinzip der Strahlablenkung anhand zweier Szenarien. Die elektroakustische Wandlervorrichtung 1 ist beispielhaft in einer Stoßstange der Kraftfahrzeugs 14 integriert, was nicht zwingend erforderlich ist. Das Kraftfahrzeug 14 kann eine beliebige Anzahl von elektroakustischen Wandlervorrichtungen 1 aufweisen.

Beispielsweise können vier elektroakustische Wandlervorrichtung 1 vorgesehen sein.

In einem ersten Szenario würden bei einer gleichzeitigen Ansteuerung der einzelnen Wandlerelemente 2, 3 beide zusammen in Phase schwingen und eine Schallkeule 15 erzeugen, welche nicht geneigt ist. Ein sich auf einer Fahrbahn befindliches Objekt 16 wird in dem beispielhaften ersten Szenario gut von der Schallkeule 15 erfasst und würde ein entsprechendes Echo zurückstreuen. Real weisen die Wandlerelemente 2, 3 jedoch in der Regel, wie oben beschrieben, Bauteiltoleranz auf, sodass die entstehende Schallkeule 15 in vertikaler Richtung geneigt sein kann. Aufgrund der Bauteiltoleranzen liegt daher bereits eine ungewollte und in der Regel auch unbekannte Strahlablenkung vor. Diese ist in Fig. 3 in einem zweiten Szenario gezeigt. Das Objekt 16 kann in diesem beispielhaften Fall aufgrund der ungewollten Strahlablenkung nicht detektiert werden, da die Schallkeule 15 derart in vertikaler Richtung abgelenkt ist, dass das Objekt 16 von der Schallkeule 15 nicht erfasst wird und aus diesem Grund kein ausreichendes Echo erzeugt.

Aus diesem Grund ist es bei der elektroakustischen Wandlervorrichtung 1 von Bedeutung, dass eine Phasenverschiebung zwischen den einzelnen schwingenden Wandlerelementen 2, 3 bekannt ist und kompensiert werden kann. Im Folgenden wird ein Verfahren zum Betreiben der elektroakustischen Wandlervorrichtung 1 der Fig. 1 beschrieben, welches einen solchen Abgleich der Wandlerelemente 2, 3 ermöglicht. Hierbei wird der Effekt des sogenannten Übersprechens (engl. cross-talk) verwendet. Dieser soll zunächst kurz erläutert werden.

Beim Anregen eines Wandlerelements 2, 3 wird viel Energie im mechanischen Bereich 9 des Ersatzmodells 5 benötigt, um die Membran eines Wandlerelements 2, 3 in Schwingung und die die Membran umgebende Luft in Bewegung zu versetzen und Schall, insbesondere Ultraschall, zu generieren. Eine energetische Effektivität ist hierbei aber vergleichsweise gering und neben der Schallgenerierung wird zusätzlich Wärme erzeugt. Außerdem werden auch Schallwellen innerhalb der Wandlerelements 2, 3 erzeugt, was auch als Körperschall bezeichnet werden kann. Der Körperschall kann sich durch die gesamte elektroakustische Wandlervorrichtung 1 ausbreiten. Dies hat zur Folge, dass, wenn das erste Wandlerelement 2 betrieben wird, durch den Körperschall auch das zweite Wandlerelement 3 angeregt wird, auch wenn dieses selbst nicht aktiv angetrieben wird.

Fig. 4 zeigt schematisch ein elektromechanisches Ersatzschaltbild 17 der elektroakustischen Wandlervorrichtung 1 der Fig. 1. Da die beispielhafte elektroakustische Wandlervorrichtung 1 insgesamt zwei Wandlerelemente 2, 3 aufweist, entspricht das elektromechanisches Ersatzschaltbild 17 der elektroakustischen Wandlervorrichtung 1 zwei gekoppelten elektromechanischen Ersatzschaltbildern 5 gemäß Fig. 2. Identische Elemente werden in Fig. 4 mit den Bezugszeichen der Fig. 2 versehen.

Im elektromechanischen Ersatzschaltbild 17 der elektroakustischen Wandlervorrichtung 1 sind die Wandlerelemente 2, 3 über einen Kondensator 18 miteinander verbunden. Der Kondensator 18 verbindet dabei die mechanischen Bereiche 9 miteinander. Lediglich beispielhaft verbindet der Kondensator 18 die mechanischen Bereiche 9 derart, dass er jeweils zwischen den induktiven Anteilen 10 und den ohmschen Anteilen 11 mit den mechanischen Bereichen 9 verbunden ist. Der Kondensator 18 repräsentiert eine steife Verbindung der Wandlerelemente 2, 3, wodurch diese gekoppelt sind. Dies hat zur Folge, dass die Wandlerelemente 2, 3 nicht unabhängig voneinander betrieben werden können. Kopplungen können aber auch aufgrund von anderen Wechselwirkungen herrühren, wenn zum Beispiel keine reine Massenunabhängigkeit (induktive Kopplung im Ersatzschaltbild 17 der elektroakustischen Wandlervorrichtung 1) vorliegt, oder auch Dämpfungseigenschaften der Wandlerelemente 2, 3 nicht komplett unabhängig sind (ohmsche Kopplung im Ersatzschaltbild 17 der elektroakustischen Wandlervorrichtung 1), was in Fig. 4 der Einfachheit halber nicht gezeigt ist.

In der beispielhaften Darstellung der Fig. 4 ist das erste Wandlerelement 2 mit der Signalquelle 13 verbunden, um elektrisch angeregt zu werden. Das zweite Wandlerelement 3 ist mit Abgriffkontakten 19 verbunden, die mit dem elektrischen Bereich 6 und dem mechanischen Bereich 9 verbunden sind. Umgekehrt kann das zweite Wandlerelement 3 mit der Signalquelle 13 verbunden sein, um es anzuregen, während das erste Wandlerelement 2 mit den Abgriffkontakten 19 verbunden sein kann. Durch die elektrische und/oder mechanische Kopplung der Wandlerelemente 2, 3 wird bewirkt, dass beim Anregen des ersten Wandlerelement 2 an den Abgriffkontakten 19 am zweiten Wandlerelement 3 ein messbares erstes Übersprechsignal detektiert werden kann. Umgekehrt kann beim Anregen des zweiten Wandlerelement 3 an den Abgriffkontakten 19 am ersten Wandlerelement 2 ein messbares zweites Übersprechsignal detektiert werden.

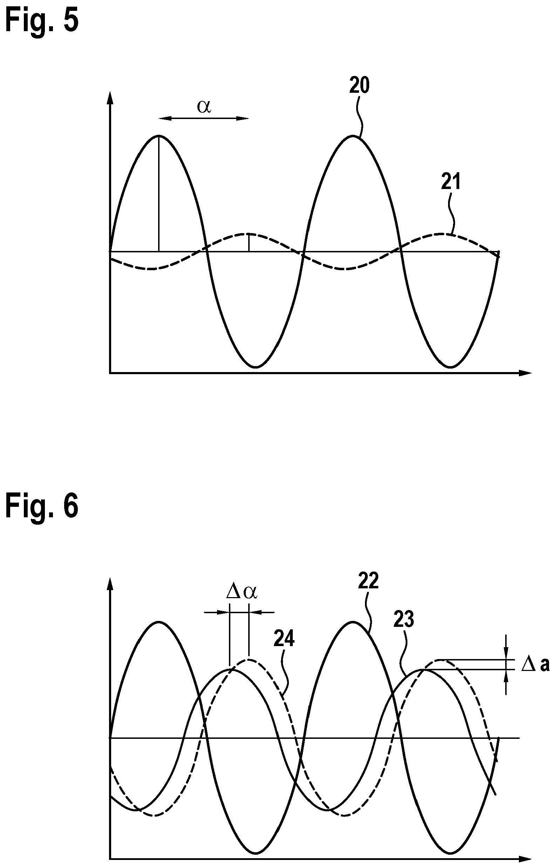

Fig. 5 zeigt schematisch und beispielhaft ein erstes Amplitudensignal 20 des angeregten ersten Wandlerelements 2 und ein zweites Amplitudensignal 21 des mit dem ersten Wandlerelement 2 gekoppelten zweiten Wandlerelements 3. Hierbei sind die jeweiligen Amplituden gegen eine Zeit aufgetragen.

Fig. 5 zeigt, dass das erste Wandlerelement 2 mit einer wesentlich höheren Amplitude schwingt als das zweite Wandlerelement 3, da das zweite Wandlerelement 2 aktiv elektrisch angeregt wird. Außerdem weisen die Amplitudensignale 20, 21 eine Phasenverschiebung α auf. Das zweite Amplitudensignal 21 repräsentiert hierbei das erste Übersprechsignal am zweiten Wandlerelement 3 infolge der Anregung des ersten Wandlerelements 2 und der elektrischen und/oder mechanischen Kopplung des ersten und des zweiten Wandlerelements 2, 3. Insbesondere bei Wandlerelementen 2, 3, die auf einen Resonanzbetrieb ausgelegt sind, führt das Übersprechen jedoch dazu, dass eine resonante Anregung erfolgt, wodurch das Übersprechen besonders stark ausgeprägt sein kann. In diesem Fall weist das zweite Amplitudensignal 21 eine höhere Amplitude auf, als es in Fig. 5 gezeigt ist.

Im Folgenden wird das Verfahren zum Betreiben der elektroakustischen Wandlervorrichtung 1 der Fig. 1 beschrieben, welches den Abgleich einer bauartbedingten Phasenverschiebung zwischen den Wandlerelementen 2, 3 ermöglicht. Das Verfahren umfasst folgende Verfahrensschritte. Zunächst wird das erste Wandlerelement 2 mittels eines elektrischen Erregersignals 22 angeregt. Anschließend wird das infolge der elektrischen und/oder mechanischen Kopplung des ersten und des zweiten Wandlerelements 2, 3 auftretende erste Übersprechsignal 23 am zweiten Wandlerelement 3 detektiert, während das erste Wandlerelement 2 angeregt wird. Dann wird das zweite Wandlerelement 3 mittels des elektrischen Erregersignals 22 angeregt und das zweite Übersprechsignal 24 am ersten Wandlerelement 2 detektiert, während das zweite Wandlerelement 3 angeregt wird.

Fig. 6 zeigt schematisch das Erregersignal 22, das erste Übersprechsignal 23 und das zweite Übersprechsignal 24. Die jeweiligen Amplituden sind erneut gegen die Zeit aufgetragen. Das Erregersignal 22 entspricht in Fig. 5 dem ersten Amplitudensignal 20. Das erste Übersprechsignal 23 entspricht in Fig. 5 dem zweiten Amplitudensignal 21. Zusätzlich ist das zweite Übersprechsignal 24 gezeigt. Die Übersprechsignale 23, 24 weisen jeweils kleinere Amplituden auf als das Erregersignal 22, wobei jedoch das Erregersignal im Vergleich zu Fig. 5 skaliert ist. Die Übersprechsignale 23, 24 sind im Vergleich zum Erregersignal 22 wie in Fig. 5 phasenverschoben.

Zusätzlich weisen die Übersprechsignale 23, 24 eine Phasenverschiebung Δα auf. Die Phasenverschiebung Δα zwischen dem ersten Übersprechsignal 23 und dem zweiten Übersprechsignal 24 wird im Rahmen des Verfahrens ermittelt. Die elektroakustische Wandlervorrichtung 1 wird dann derart angetrieben, dass das erste Wandlerelement 2 mittels eines ersten Steuersignals angesteuert wird und das zweite Wandlerelement 3 mittels eines zweiten Steuersignals angesteuert wird. Das erste Steuersignal und das zweite Steuersignal weisend dabei einen der ermittelten Phasenverschiebung Δα entsprechenden Phasenversatz auf. Dadurch wird die bauartbedingte Phasenverschiebung Δα beim Ansteuern der Wandlerelemente 2, 3 kompensiert. Auf diese Weise kann eine präzise Strahlablenkung einer Schallkeule 15 erfolgen.

Optional kann im Rahmen des Verfahrens zusätzlich auch ein Amplitudenverhältnis zwischen dem ersten Übersprechsignal 23 und dem zweiten Übersprechsignal 24 ermittelt werden. In diesem Fall werden die Steuersignale auf Basis des ermittelten Amplitudenverhältnisses angepasst und das Ansteuern der Wandlerelemente erfolgt mittels der angepassten Steuersignale. In Fig. 6 ist beispielhaft gezeigt, dass anstatt des Amplitudenverhältnisses eine Amplitudendifferenz Δa zwischen dem ersten und dem zweiten Übersprechsignal 23, 24 ermittelt und verwendet wurde, um die Steuersignale anzupassen.

In einem Beispiel kann es also sein, dass bei einem Normalbetrieb der elektroakustischen Wandlervorrichtung 1, wobei zunächst keine Strahlablenkung erfolgen soll, das zweite Wandlerelement 3 in Bezug zum ersten Wandlerelement 2 mit einem Phasenversatz von 10° angesteuert wird und gleichzeitig noch eine verringerte Ansteuerspannung von 5 V verwendet wird, damit beide Wandlerelemente 2, 3 in Phase und mit gleicher Amplitude schwingen und somit eine ideale Richtcharakteristik aufweisen. Das ermitteln des Amplitudenverhältnisses bzw. der Amplitudendifferenz Δa und das anpassen der Steuersignale können jedoch auch entfallen. In diesem Fall werden die Wandlerelemente 2, 3 lediglich mit einem Phasenversatz von 10° angesteuert, wobei die bauartbedingte Phasenverschiebung Δα kompensiert wird, sodass die Wandlerelemente 2, 3 in Phase schwingen.

Die ermittelte Phasenverschiebung Δα und/oder das ermittelte Amplitudenverhältnis Δa kann zusätzlich mit einer Datenhistorie mit Informationen über zuvor ermittelte Phasenverschiebungen Δα und/oder Amplitudenverhältnissen bzw. Amplitudendifferenzen Δa verglichen werden. Dadurch kann geprüft werden, ob die ermittelte Phasenverschiebung Δα und/oder das ermittelte Amplitudenverhältnis bzw. die ermittelte Amplitudendifferenz Δa Veränderungen unterworfen ist.

Weist die mikroelektroakustische Wandlervorrichtung 1 mehr als zwei elektrisch und/oder mechanisch gekoppelte Wandlerelementen 2, 3 auf, können die Wandlerelemente 2, 3 sukzessive mittels des Erregersignals 22 angeregt und jeweils Übersprechsignale 23, 24 an den Wandlerelementen 2, 3 detektiert werden, um für alle Wandlerelemente 2, 3 eine Phasenverschiebung Δα zwischen ihren Übersprechsignalen 23, 24 zu ermitteln. Die Wandlerelemente 2, 3 werden jeweils mittels eines separaten Steuersignals angesteuert. Die Steuersignale weisen dabei jeweils einen der ermittelten Phasenverschiebungen Δα entsprechenden Phasenversatz auf.

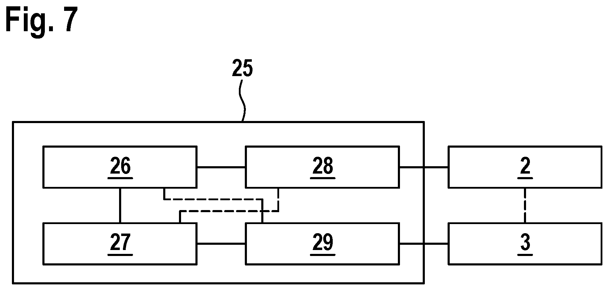

Fig. 7 zeigt schematisch ein System 25 zum Durchführen des Verfahrens zum Betreiben der elektroakustischen Wandlervorrichtung 1 der Fig. 1.

Das System 25 weist einen Frequenzgenerator 26, eine Auswerteeinrichtung 27 und zwei Schalter 28, 29 auf. Die Schalter 28, 29 können beispielsweise in einer anwendungsspezifischen integrierten Schaltung (engl. application-specific integrated circuit, ASIC) implementiert sein, aber auch als diskrete ansteuerbare Komponenten auf einer Leiterplatte (engl. printed circuit board, PCB) vorgesehen sein. Der Frequenzgenerator 26 ist mit der Auswerteeinrichtung 27 verbunden und dazu ausgebildet, eine Phasenverschiebung zu ermitteln.

Der Frequenzgenerator 26 ist dazu ausgebildet, das elektrische Erregersignal 22 zu generieren. Die Auswerteeinrichtung 27 ist dazu ausgebildet, die infolge der elektrischen und/oder mechanischen Kopplung der Wandlerelemente 2, 3 auftretenden Übersprechsignale an den Wandlerelemente 2, 3 zu detektieren und die Phasenverschiebung Δα zwischen den Übersprechsignalen 23, 24 zu ermitteln. Die Schalter 28, 29 sind jeweils mit dem Frequenzgenerator 26 und der Auswerteeinrichtung 27 verbindbar. Ein erster Schalter 28 ist mit dem ersten Wandlerelement 2 und ein zweiter Schalter 29 ist mit dem zweiten Wandlerelement 3 verbindbar. Dadurch sind die Schalter 28, 29 dazu vorgesehen, das Erregersignal 22 des Frequenzgenerators 26 auf die Wandlerelemente 2, 3 und die Übersprechsignale 23, 24 auf die Auswerteeinrichtung 27 zu schalten. Der Frequenzgenerator 26 ist dazu ausgebildet, die Steuersignale auf Grundlage der ermittelten Phasenverschiebung Δα zu generieren. Die Schalter 28, 29 sind dazu vorgesehen, die Steuersignale des Frequenzgenerators 26 auf die Wandlerelemente 2, 3 zu schalten. Um die Phasenverschiebung zu kompensieren, weist das System 25 für jedes Wandlerelement 2, 3 einen mit dem Frequenzgenerator 26 verbundenen Phasenshifter auf, was in Fig. 7 nicht gezeigt ist. Alternativ kann auch für jedes Wandlerelement 2, 3 ein separater Frequenzgenerator 26 vorgesehen sein. In diesem Fall können die Phasenshifter auch entfallen.

Die Auswerteeinrichtung 27 kann zusätzlich dazu ausgebildet sein, das Amplitudenverhältnis der Übersprechsignale 23, 24 bzw. die Amplitudendifferenz Δa zu ermitteln. Der Frequenzgenerator 26 ist in diesem Fall dazu ausgebildet, die Steuersignale auf Basis des Amplitudenverhältnisses bzw. der Amplitudendifferenz Δa anzupassen.

## Patentansprüche

1. Verfahren zum Betreiben einer elektroakustischen Wandlervorrichtung (1), wobei die elektroakustische Wandlervorrichtung (1) zumindest ein erstes Wandlerelement (2) und ein zweites Wandlerelement (3) aufweist,
wobei die Wandlerelemente (2, 3) jeweils dazu ausgebildet sind, akustische Signale durch elektrische Anregung zu generieren und/oder durch akustische Anregung zu detektieren,
wobei das Verfahren folgende Verfahrensschritte umfasst:
- Anregen des ersten Wandlerelements (2) mittels eines elektrischen Erregersignals (22),
- Detektieren eines infolge einer elektrischen und/oder mechanischen Kopplung des ersten und des zweiten Wandlerelements (2, 3) auftretenden ersten Übersprechsignals (23) am zweiten Wandlerelement (3), während das erste Wandlerelement (2) angeregt wird,
- Anregen des zweiten Wandlerelements (3) mittels des elektrischen Erregersignals (22),
- Detektieren eines infolge der elektrischen und/oder mechanischen Kopplung des ersten und des zweiten Wandlerelements (2, 3) auftretenden zweiten Übersprechsignals (24) am ersten Wandlerelement (2), während das zweite Wandlerelement (3) angeregt wird,
- Ermitteln einer Phasenverschiebung Δα zwischen dem ersten Übersprechsignal (23) und dem zweiten Übersprechsignal (24),
- Ansteuern des ersten Wandlerelements (2) mittels eines ersten Steuersignals und Ansteuern des zweiten Wandlerelements (3) mittels eines zweiten Steuersignals,
wobei das erste Steuersignal und das zweite Steuersignal einen der ermittelten Phasenverschiebung Δα entsprechenden Phasenversatz aufweisen.

2. Verfahren gemäß Anspruch 1 mit folgenden zusätzlichen Verfahrensschritten:
- Ermitteln eines Amplitudenverhältnisses zwischen dem ersten Übersprechsignal (23) und dem zweiten Übersprechsignal (24),
- Anpassen der Steuersignale auf Basis des ermittelten Amplitudenverhältnisses,
- Ansteuern der Wandlerelemente (2, 3) mittels der angepassten Steuersignale.

3. Verfahren gemäß einem der vorhergehenden Ansprüche mit folgenden zusätzlichen Verfahrensschritten:
- Vergleichen der ermittelten Phasenverschiebung Δα und/oder das ermittelte Amplitudenverhältnis mit einer Datenhistorie aufweisend Informationen über zuvor ermittelte Phasenverschiebungen und/oder Amplitudenverhältnisse,
- Prüfen, ob die ermittelte Phasenverschiebung Δα und/oder das ermittelte Amplitudenverhältnis Veränderungen unterworfen ist,
- Berücksichtigen der Veränderungen beim Ansteuern der Wandlerelemente (2, 3).

4. Verfahren gemäß einem der vorhergehenden Ansprüche,
wobei die mikroelektroakustische Wandlervorrichtung (1) eine Mehrzahl von elektrisch und/oder mechanisch gekoppelten Wandlerelementen (2, 3) aufweist, wobei die Wandlerelemente (2, 3) sukzessive mittels des Erregersignals (22) angeregt und jeweils Übersprechsignale (23, 24) an den Wandlerelementen (2, 3) detektiert werden, um für alle Wandlerelemente (2, 3) eine Phasenverschiebung Δα zwischen ihren Übersprechsignalen (23, 24) zu ermitteln,
wobei die Wandlerelemente (2, 3) jeweils mittels eines separaten Steuersignals angesteuert werden,
wobei die Steuersignale jeweils einen der ermittelten Phasenverschiebungen Δα entsprechenden Phasenversatz aufweisen.

5. Verfahren gemäß einem der vorhergehenden Ansprüche,
wobei die Wandlerelemente (2, 3) der elektroakustischen Wandlervorrichtung (1) baugleich ausgebildet sind.

6. Verfahren gemäß einem der vorhergehenden Ansprüche,
wobei die Wandlerelemente (2, 3) jeweils dazu ausgebildet sind, Ultraschall durch elektrische Anregung zu generieren und/oder durch akustische Anregung zu detektieren.

7. Verfahren gemäß einem der vorhergehenden Ansprüche,
wobei die elektroakustische Wandlervorrichtung (1) Bestandteil eines Kraftfahrzeugs (14) ist.

8. Verfahren gemäß einem der vorhergehenden Ansprüche,
wobei das Verfahren vor jeder Verwendung der elektroakustischen Wandlervorrichtung (1) oder nach jedem Start des Kraftfahrzeugs (15) durchgeführt wird.

9. System (25) zum Durchführen des Verfahrens gemäß einem der vorhergehenden Ansprüche,
mit einem Frequenzgenerator (26), einer Auswerteeinrichtung (27) und zwei Schaltern (28, 29),
wobei der Frequenzgenerator (26) dazu ausgebildet ist, das elektrische Erregersignal (22) zu generieren,
wobei die Auswerteeinrichtung (27) dazu ausgebildet ist, die infolge der elektrischen und/oder mechanischen Kopplung der Wandlerelemente (2, 3) auftretenden Übersprechsignale (23, 24) an den Wandlerelemente (2, 3) zu detektieren und die Phasenverschiebung Δα zwischen den Übersprechsignalen (23, 24) zu ermitteln,
wobei die Schalter (28, 29) jeweils mit dem Frequenzgenerator (26) und der Auswerteeinrichtung (27) verbindbar sind,
wobei ein erster Schalter (28) mit dem ersten Wandlerelement (2) und ein zweiter Schalter (29) mit dem zweiten Wandlerelement (3) verbindbar ist,
wobei der Frequenzgenerator (26) dazu ausgebildet ist, die Steuersignale auf Grundlage der ermittelten Phasenverschiebung Δα zu generieren,
wobei die Schalter (28, 29) dazu vorgesehen sind, das Erregersignal (22) und die Steuersignale des Frequenzgenerators (26) auf die Wandlerelemente (2, 3) und die Übersprechsignale (23, 24) auf die Auswerteeinrichtung (27) zu schalten.

10. System (25) gemäß Anspruch 9,
wobei die Auswerteeinrichtung (27) dazu ausgebildet ist, ein Amplitudenverhältnis der Übersprechsignale (23, 24) zu ermitteln,
wobei der Frequenzgenerator (26) dazu ausgebildet ist, die Steuersignale auf Basis des Amplitudenverhältnisses anzupassen.

## Claims

1. Method for operating an electroacoustic transducer device (1), the electroacoustic transducer device (1) having at least a first transducer element (2) and a second transducer element (3),
each of the transducer elements (2, 3) being designed to generate acoustic signals by electrical excitation and/or to detect acoustic signals by acoustic excitation,
the method comprising the following method steps:
- exciting the first transducer element (2) by means of an electrical excitation signal (22),
- detecting a first crosstalk signal (23) that occurs on the second transducer element (3) as a result of electrical and/or mechanical coupling of the first and second transducer elements (2, 3), while the first transducer element (2) is being excited,
- exciting the second transducer element (3) by means of the electrical excitation signal (22),
- detecting a second crosstalk signal (24) that occurs on the first transducer element (2) as a result of electrical and/or mechanical coupling of the first and second transducer elements (2, 3), while the second transducer element (3) is being excited,
- determining a phase shift Δα between the first crosstalk signal (23) and the second crosstalk signal (24),
- driving the first transducer element (2) by means of a first control signal and driving the second transducer element (3) by means of a second control signal,
the first control signal and the second control signal having a phase offset corresponding to the determined phase shift Δα.

2. Method according to Claim 1, having the following additional method steps:
- determining an amplitude ratio between the first crosstalk signal (23) and the second crosstalk signal (24),
- adapting the control signals on the basis of the determined amplitude ratio,
- driving the transducer elements (2, 3) by means of the adapted control signals.

3. Method according to either of the preceding claims, having the following additional method steps:
- comparing the determined phase shift Δα and/or the determined amplitude ratio with a data history comprising information about previously determined phase shifts and/or amplitude ratios,
- checking whether the determined phase shift Δα and/or the determined amplitude ratio is subject to changes,
- taking into account the changes when driving the transducer elements (2, 3).

4. Method according to one of the preceding claims,
the microelectroacoustic transducer device (1) having a plurality of electrically and/or mechanically coupled transducer elements (2, 3),
wherein the transducer elements (2, 3) are successively excited by means of the excitation signal (22) and crosstalk signals (23, 24) are detected on each of the transducer elements (2, 3) in order to determine for all transducer elements (2, 3) a phase shift Δα between their crosstalk signals (23, 24),
wherein each of the transducer elements (2, 3) is driven by means of a separate control signal,
each of the control signals having a phase offset corresponding to the determined phase shift Δα.

5. Method according to one of the preceding claims,
the transducer elements (2, 3) of the electroacoustic transducer device (1) being of identical design.

6. Method according to one of the preceding claims,
each of the transducer elements (2, 3) being designed to generate ultrasound by electrical excitation and/or to detect ultrasound by acoustic excitation.

7. Method according to one of the preceding claims,
the electroacoustic transducer device (1) being part of a motor vehicle (14).

8. Method according to one of the preceding claims,
the method being carried out before each use of the electroacoustic transducer device (1) or after each start of the motor vehicle (15).

9. System (25) for carrying out the method according to one of the preceding claims,
comprising a frequency generator (26), an evaluation device (27) and two switches (28, 29),
the frequency generator (26) being designed to generate the electrical excitation signal (22),
the evaluation device (27) being designed to detect the crosstalk signals (23, 24) that occur on the transducer elements (2, 3) as a result of the electrical and/or mechanical coupling of the transducer elements (2, 3) and to determine the phase shift Δα between the crosstalk signals (23, 24),
each of the switches (28, 29) being capable of being connected to the frequency generator (26) and the evaluation device (27),
a first switch (28) being capable of being connected to the first transducer element (2) and a second switch (29) being capable of being connected to the second transducer element (3),
the frequency generator (26) being designed to generate the control signals on the basis of the determined phase shift Δα,
the switches (28, 29) being intended to switch the excitation signal (22) and the control signals of the frequency generator (26) to the transducer elements (2, 3) and the crosstalk signals (23, 24) to the evaluation device (27).

10. System (25) according to Claim 9,
the evaluation device (27) being designed to determine an amplitude ratio of the crosstalk signals (23, 24),
the frequency generator (26) being designed to adapt the control signals on the basis of the amplitude ratio.

## Revendications

1. Procédé de fonctionnement d'un dispositif convertisseur électroacoustique (1), le dispositif convertisseur électroacoustique (1) comportant au moins un premier élément convertisseur (2) et un deuxième élément convertisseur (3),
les éléments convertisseurs (2, 3) étant formés chacun pour générer des signaux acoustiques par excitation électrique et/ou pour les détecter par excitation acoustique,
le procédé comprenant des étapes de procédé suivantes :
- excitation du premier élément convertisseur (2) au moyen d'un signal électrique d'excitation (22),
- détection d'un premier signal de diaphonie (23) sur le deuxième élément convertisseur (3) résultant d'un couplage électrique et/ou mécanique du premier et du deuxième élément convertisseur (2, 3), tandis que le premier élément convertisseur (2) est excité,
- excitation du deuxième élément convertisseur (3) au moyen du signal électrique d'excitation (22),
- détection d'un deuxième signal de diaphonie (24) sur le premier élément convertisseur (2) résultant du couplage électrique et/ou mécanique du premier et du deuxième élément convertisseur (2, 3), tandis que le deuxième élément convertisseur (3) est excité,
- détermination d'un déphasage Δα entre le premier signal de diaphonie (23) et le deuxième signal de diaphonie (24),
- pilotage du premier élément convertisseur (2) au moyen d'un premier signal de commande et pilotage du deuxième élément convertisseur (3) au moyen d'un deuxième signal de commande,
le premier signal de commande et le deuxième signal de commande présentant un déphasage correspondant au déphasage Δα déterminé.

2. Procédé selon la revendication 1, avec des étapes de procédé supplémentaires suivantes :
- détermination d'un rapport d'amplitude entre le premier signal de diaphonie (23) et le deuxième signal de diaphonie (24),
- adaptation des signaux de commande sur la base du rapport d'amplitude déterminé,
- pilotage des éléments convertisseurs (2, 3) au moyen des signaux de commande adaptés.

3. Procédé selon l'une des revendications précédentes avec des étapes de procédé supplémentaires suivantes :
- comparaison du déphasage Δα déterminé et/ou du rapport d'amplitude déterminé à un historique de données comportant des informations sur des déphasages et/ou des rapports d'amplitude précédemment déterminés,
- vérification si le déphasage Δα déterminé et/ou le rapport d'amplitude déterminé subissent des changements,
- prise en compte des changements lors du pilotage des éléments convertisseurs (2, 3).

4. Procédé selon l'une des revendications précédentes,
le dispositif convertisseur microélectroacoustique (1) comportant une multitude d'éléments convertisseurs (2, 3) couplés électriquement et/ou mécaniquement,
les éléments convertisseurs (2, 3) étant successivement excités au moyen du signal d'excitation (22) et des signaux de diaphonie (23, 24) étant chacun détectés sur les éléments convertisseurs (2, 3) pour déterminer pour tous les éléments convertisseurs (2, 3) un déphasage Δα entre leurs signaux de diaphonie (23, 24),
les éléments convertisseurs (2, 3) étant pilotés chacun au moyen d'un signal de commande distinct,
les signaux de commande comportant chacun un déphasage correspondant aux déphasages Δα déterminés.

5. Procédé selon l'une des revendications précédentes,
les éléments convertisseurs (2, 3) du dispositif convertisseur électroacoustique (1) étant de construction identique.

6. Procédé selon l'une des revendications précédentes,
les éléments convertisseurs (2, 3) étant chacun formés pour générer des ultrasons par excitation électrique et/ou pour les détecter par excitation acoustique.

7. Procédé selon l'une des revendications précédentes,
le dispositif convertisseur électroacoustique (1) faisant partie d'un véhicule à moteur (14).

8. Procédé selon l'une des revendications précédentes,
le procédé étant mis en œuvre avant chaque utilisation du dispositif convertisseur électroacoustique (1) ou après chaque démarrage du véhicule à moteur (15).

9. Système (25) destiné à mettre en œuvre le procédé selon l'une des revendications précédentes,
avec un générateur de fréquence (26), un système d'évaluation (27) et de deux commutateurs (28, 29),
le générateur de fréquence (26) étant formé pour générer le signal électrique d'excitation (22),
le système d'évaluation (27) étant formé pour détecter des signaux de diaphonie (23, 24) sur les éléments convertisseurs (2, 3) résultant du couplage électrique et/ou mécanique des éléments convertisseurs (2, 3) et pour déterminer le déphasage Δα entre les signaux de diaphonie (23, 24),
les commutateurs (28, 29) pouvant être reliés chacun au générateur de fréquence (26) et au système d'évaluation (27),
un premier commutateur (28) pouvant être relié au premier élément convertisseur (2) et un second commutateur (29) pouvant être relié au deuxième élément convertisseur (3),
le générateur de fréquence (26) étant formé pour générer les signaux de commande sur la base du déphasage Δα déterminé,
les commutateurs (28, 29) étant prévus pour commuter le signal d'excitation (22) et les signaux de commande du générateur de fréquence (26) sur les éléments convertisseurs (2, 3) et les signaux de diaphonie (23, 24) sur le système d'évaluation (27).

10. Système (25) selon la revendication 9,
le système d'évaluation (27) étant formé pour déterminer un rapport d'amplitude des signaux de diaphonie (23, 24),
le générateur de fréquence (26) étant formé pour adapter les signaux de commande sur la base du rapport d'amplitude.
